# EUROPÄISCHE PATENTSCHRIFT

(11) **EP 3 074 445 B1**
(45) Veröffentlichungstag und Bekanntmachung des Hinweises auf die Patenterteilung: **06.01.2021**
(21) Anmeldenummer: 14800050.8
(22) Anmeldetag: 19.11.2014
(51) Int. Cl.: C08G 18/58

(54) **POLYURETHANSYSTEM MIT LANGER VERARBEITUNGSZEIT UND SCHNELLER AUSHÄRTUNG**
POLYURETHANE SYSTEM WITH LONG POT LIFE AND RAPID HARDENING
SYSTÈME DE POLYURÉTHANE PRÉSENTANT UN TEMPS DE TRANSFORMATION PROLONGÉ ET UN DURCISSEMENT PLUS RAPIDE

(30) Priorität: 29.11.2013 EP 13195137
(43) Veröffentlichungstag der Anmeldung: 05.10.2016
(73) Patentinhaber: BASF SE, 67056 Ludwigshafen am Rhein (DE)
(72) Erfinder: LIESE, Julia, 28201 Bremen (DE); SCHÜTTE, Markus, 49080 Osnabrück (DE); ELING, Berend, 49448 Lemförde (DE)
(74) Vertreter: BASF IP Association
(86) Internationale Anmeldenummer: PCT/EP2014/074983
(87) Internationale Veröffentlichungsnummer: WO 2015/078740

(56) Entgegenhaltungen:
- WO-A1-2010/121898
- US-A1- 2013 303 694

## Beschreibung

Die vorliegende Erfindung betrifft Verfahren zur Herstellung von Polyurethanen, bei dem man (a) Polyisocyanat, (b) einer Mischung, erhältlich durch Einbringen eines Alkali- oder Erdalkalimetallsalzes in mindestens eine Urethangruppe enthaltende Verbindung R-NH-CO-O-R', die bei 20 °C fest oder flüssig vorliegt, (c) eine oder mehrere Epoxidgruppen enthaltende Verbindungen und gegebenenfalls (d) Polyol, (e) Kettenverlängerer und (f) Füllstoffe und weitere Additive zu einer Reaktionsmischung vermischt und zum Polyurethan ausreagieren lässt, wobei der Gehalt an Alkali- oder Erdalkalimetallionen pro Urethangruppe in der Verbindung (b) 0,0001 bis 1 beträgt. Weiter betrifft die vorliegende Erfindung ein Polyurethan, erhältlich nach einem solchen Verfahren und die Verwendung eines solchen Polyurethans zur Herstellung von Karosseriebauteilen für Fahrzeuge.

Insbesondere zur Herstellung von großflächigen Faserverbundstoffen wird ein Kunststoffsystem als Matrixsystem benötigt, dass eine lange offene Zeit bei konstant niedriger Viskosität aufweist, damit die Verstärkungsmittel, wie Glas- oder Carbonfasern oder -fasermatten, vollständig benetzt werden bevor das Kunststoffsystem zum fertigen Kunststoff aushärtet. Ebenso wird aber auch gefordert, dass die Kunststoffsysteme möglichst schnell zum Kunststoff aushärten, so dass schnellere Zykluszeiten möglich werden und damit die Rentabilität erhöht wird. In der Regel wird die lange offene Zeit nur durch Epoxidsysteme oder Polyethersysteme erreicht, diese benötigen aber in der Regel lange Zeiten zum Aushärten.

Eine Möglichkeit zur Verlängerung der offenen Zeit bei schneller Aushärtung von Polyurethansystemen ist der Einsatz von säureblockierten Katalysatoren. So beschreibt EP 2257580 den Einsatz von säureblockierten Aminkatalysatoren in Polyurethansystemen zur Herstellung von Sandwichbauteilen. Säureblockierte Katalysatoren ermöglichen allerdings nur eine Verlängerung der Verarbeitungszeit im Bereich von Minuten. Gefordert wird dagegen eine Verarbeitungszeit von bis zu mehreren Stunden.

In WO 10121898 wird eine Polyisocyanat Komponente beschrieben, die in Teilen aus einem bezüglich des Anions bidentalen Harnstoff-Prepolymer (-NH-CO-NH-) besteht, das mit Lithiumchlorid gemischt wurde. Mischt man diese Komponente mit einer Diglycidylether und Polyol enthaltenden zweiten Komponente und erwärmt diese Mischung auf 80-90 °C, findet eine rasche Reaktion statt, die zu einer Durchhärtung des Materials führt.

WO 12103965 beschreibt ein Epoxy-basiertes System, das auf der gleichen Katalyse wie in WO 10121898 beschrieben basiert. Die für die Katalyse notwendige Gruppen werden hier hier über die zwei am Stickstoff befindlichen H-Atome als bezüglich des Anions bidentale Carboxamid Gruppe (-CO-NH₂) mit LiCl definiert.

WO 13098034 umfasst eine reaktive Mischung, die neben Lithium-Halogenid eine bezüglich des Kations bidentale -(-CO-NH-CO-)- Gruppe erfordert. Die in dieser Schrift beschriebene Harnstoffkomponente kann auch polydentale Biuret Gruppen (-NH-CO-NH-CO-NH-) enthalten.

In WO 13143841 wird ein Trimerisierungskatalysator bestehend aus Alkali- oder Erdalkalisalzen in Kombination mit gegenüber dem Anion bidentalen Carboxamidgruppen der Struktur -CO-NH2 oder in Kombination mit Gruppen -(-CO-NH-CO-)-, die sich bezüglich des Kations bidental verhalten, beschrieben.

Nachteilig an den in WO 10121898, WO 12103965 WO 13098034 und WO 13143841 beschriebenen Systemen ist, dass der Harnstoff, Carboxylat oder Biuret- geblockte Katalysator in relativ großen Mengen zugegeben werden muss, um ausreichend wirksam zu sein und relativ spröde Materialien erhalten werden.

Aufgabe der vorliegenden Erfindung war es daher ein Polyurethansystem zu liefern, das eine lange offene Zeit aufweist, innerhalb von wenigen Minuten aushärten kann und eine erhöhte Effektivität der Katalyse im Vergleich zu WO 10121898, WO 12103965 WO 13098034 und WO 13143841 aufweist. Dabei soll das Polyurethansystem die Herstellung von Polyurethanen mit unterschiedlichsten mechanischen Eigenschaften erlauben.

Die erfindungsgemäße Aufgabe wurde gelöst durch ein Polyurethansystem enthaltend (a) Polyisocyanat, (b) einer Mischung, erhältlich durch Einbringen eines Alkali- oder Erdalkalimetallsalzes in mindestens eine Urethangruppe enthaltende Verbindung R-NH-CO-O-R', die bei 20 °C fest oder flüssig vorliegt, (c) eine oder mehrere Epoxidgruppen enthaltende Verbindungen und gegebenenfalls (d) Polyol, (e) Kettenverlängerer und (f) Füllstoffe und weitere Additive , wobei der Gehalt an Alkali- oder Erdalkalimetallionen pro Urethangruppe in der Verbindung (b) 0,0001 bis 1 beträgt. Weiter betrifft die vorliegende Erfindung ein Verfahren zur Herstellung von Polyurethanen bei dem man die Komponenten eines erfindungsgemäßen Polyurethansystems zu einer Reaktionsmischung vermischt und zum Polyurethan ausreagieren lässt.

Überraschenderweise wurde gefunden, dass die Komponente (b) in geringer Menge als die bi- oder polydentalen Komplexe aus dem Stand der Technik enthalten sein müssen. Dabei werden im Gegensatz zu den in WO 10121898, WO 12103965 WO 13098034 und WO 13143841 beschriebenen Systemen ausschließlich monodentale Urethangruppen der Form R-NH-CO-O-R bezüglich des Salz-Anions und des Salz-Kations verwendet, wobei R ungleich Wasserstoff ist. Dies führt zu einer um den Faktor 10 erhöhten Effektivität, bezogen auf die Konzentration des Katalysators oder zu einer um den Faktor 3 erhöhte Effektivität bezüglich der offenen Zeit bei 130 °C. Eine mögliche Erklärung dafür könnte sein, dass die bi- oder polydentalen Komplexe aus dem Stand der Technik in der Lage sind, die Salzverbindungen relativ stark über elektrostatische Wechselwirkungen zu binden.

Polyisocyanate (a) umfassen alle zur Herstellung von Polyurethanen bekannten aliphatischen, cycloaliphatischen und aromatischen Isocyanat. Diese weisen vorzugsweise eine mittlere Funktionalität von kleiner 2,5 auf. Beispiele sind 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

Vorzugsweise werden als Polyisocyanate (a) monomeres Diphenylmethandiisocyanat, beispielsweise 2,2'- Diphenylmethandiisocyanat, 2,4'- Diphenylmethandiisocyanat, 4,4'- Diphenylmethandiisocyanat oder Mischungen daraus eingesetzt. Dabei kann Diphenylmethandiisocyanat auch als Mischung mit seinen Derivaten eingesetzt werden. Dabei kann Diphenylmethandiisocyanat besonders bevorzugt bis 10 Gew.-%, weiter besonders bevorzugt bis zu 5 Gew.-%, carbodiimid, uretdion-, oder uretoniminmodifiziertes Diphenylmethandiisocyanat, insbesondere carbodiimid modifiziertes Diphenylmethandiisocyanat, enthalten.

Polyisocyanate (a) können auch in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Polyolen (Bestandteil (a-2)), zum Prepolymer umgesetzt werden. Der NCO-Gehalt erfindungsgemäßer Polyisocyanatprepolymere beträgt vorzugsweise von 5 bis 32 Gew.-% NCO, besonders bevorzugt von 15 bis 28 Gew.-% NCO.

Polyole (a-2) sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Polyole Polyether- oder Polyesterole, wie die nachfolgend unter (d) beschriebenen Polyole, eingesetzt werden. Vorzugsweise werden als Polyole (a-2) Polyole, enthaltend sekundäre OH-Gruppen, eingesetzt, wie beispielsweise Polypropylenoxyd. Die Polyole (a-2) besitzen dabei vorzugsweise eine Funktionalität von 2 bis 6, besonders bevorzugt von 2 bis 4 und insbesondere 2 bis 3. Besonders bevorzugt enthalten die Polyole (a-2) Polyesterole, enthaltend hydrophobe Stoffe, wie unter (b) beschrieben.

Gegebenenfalls können der Umsetzung zum Polyisocyanatprepolymer noch Kettenverlängerungsmittel (a-3) zugegeben werden. Als Kettenverlängerungsmittel (a-3) für das Prepolymer sind zwei- oder dreiwertige Alkohole, beispielsweise Dipropylenglykol und/oder Tripropylenglykol, oder die Addukte von Dipropylenglykol und/oder Tripropylenglykol mit Alkylenoxiden, bevorzugt Dipropylenglycol, geeignet. Geeignete Kettenverlängerer sind auch unter (e) beschrieben.

Solche Polyisocyanatprepolymere sind beispielsweise in US 3883571, WO 02/10250 und US 4229347 beschrieben.

Besonders bevorzugt wird als Polyisocyanat (a) Diphenylmethandiisocyanat oder ein Polyisocyanatprepolymer auf Basis von monomerem 4,4'- Diphenylmethandiisocyanat oder Mischungen von 4,4'- Diphenylmethandiisocyanat mit dessen Derivaten und Polypropylenoxid mit einer Funktionalität von 2 bis 4 sowie gegebenenfalls Dipropylenglycol oder monomeres eingesetzt.

Als Komponente (b) wird eine Mischung, erhältlich durch Einbringen eines Alkali- oder Erdalkalimetallsalzes in eine Urethangruppen enthaltende Verbindung, eingesetzt.

Dabei wird als Alkali- oder Erdalkalimetallsalz eine Verbindung eingesetzt, die die Reaktion zwischen Isocyanaten (a), der eine oder mehrere Epoxidgruppen enthaltende Verbindungen (c) und gegebenenfalls Polyolen (d) beschleunigt. Diese Verbindungen umfassen insbesondere Salze von Natrium, Lithium, Magnesium und Kalium und Ammoniumverbindungen, vorzugsweise Lithium oder Magnesium, mit beliebigen Anionen, vorzugsweise mit Anionen organischer Säuren wie Carboxylaten und mehr bevorzugt anorganischer Säuren, wie Nitraten, Halogeniden, Sulfaten, Sulfiten, und Phosphaten, noch mehr bevorzugt mit Anionen einprotoniger Säuren, wie Nitraten oder Halogeniden und insbesondere Nitraten, Chloriden, Bromiden oder Iodiden. Besonders bevorzugt werden Lithiumchlorid, Lithiumbromid und Magnesiumdichlorid und insbesondere Lithiumchlorid eingesetzt. Erfindungsgemäße Alkali- oder Erdalkalimetallsalze können einzeln oder als Mischungen eingesetzt werden.

Vorzugsweise werden neben dem Alkali- oder Erdalkalimetallsalz keine weiteren Verbindungen eingesetzt, die die Reaktion von Isocyanaten mit gegenüber Isocyanaten reaktiven Gruppen beschleunigen.

Als Urethangruppen enthaltende Verbindung werden beliebige Verbindungen verstanden, die bei 20 °C fest oder flüssig vorliegen und mindestens eine Urethangruppe R-NH-CO-O-R' enthalten, wobei R ungleich Wasserstoff bzw. ungleich COR" ist. Vorzugsweise ist die Urethangruppen enthaltende Verbindung in Komponente (b) dabei erhältlich durch Umsetzung aus einem zweiten Polyisocyanat und einer Verbindung mit mindestens einer OH-Gruppe. Bevorzugt sind hierbei Verbindungen die bei 50 °C, besonders bevorzugt, die bei Raumtemperatur flüssig sind. Dabei ist im Rahmen der vorliegenden Erfindung unter einer "flüssigen" Substanz oder Komponente eine solche zu verstehen, die bei der angegebenen Temperatur eine Viskosität von maximal 10 Pas aufweist. Ist keine Temperatur angegeben, bezieht sich die Angabe auf 20 °C. Die Messung erfolgt dabei nach ASTM D445-11. Vorzugsweise weisen die Urethangruppen enthaltenden Verbindungen mindestens zwei Urethangruppen auf. Dabei liegt das Molekulargewicht der Urethangruppen enthaltenden Verbindungen vorzugsweise im Bereich von 200 bis 15.000 g/mol, besonders bevorzugt 300 bis 10.000 g/mol und insbesondere 500 bis 1.300 g/mol. Urethangruppen enthaltende Verbindungen können beispielsweise erhalten werden durch Reaktion von oben genannten Isocyanaten (a1) als zweites Isocyanat mit Verbindungen, die mindestens ein gegenüber Isocyanaten reaktives Wasserstoffatom aufweisen, wie Alkohole, beispielsweise Monoalkohole, wie Methanol, Ethanol, Propanol, Butanol, Pentanol, Hexanol oder längerkettige propoxylierte oder ethoxylierte Monoole, wie Poly(ethyleneoxid)monomethylether, wie z.B. die monofunktionellen Pluriol® Typen der Fa. BASF, Dialkohole, wie Ethylenglycol, Diethylenglycol, Triethylenglycol, Propylenglycol, Dipropylenglycol, Butandiol, Hexandiol, und/oder Reaktionsprodukte genannter Isocyanate mit den unten beschriebenen Polyole (d) und/oder Kettenverlängerer (e) - einzeln oder in Mischungen. Dabei können zur Herstellung der Urethangruppen haltigen Verbindung sowohl Isocyanate als auch Polyole im stoichiometrischen Überschuss eingesetzt werden. Werden Monoaklohole eingesetzt können Isocyanatgruppen und OH-Gruppen auch im stöchiometrischen Verhältnis eingesetzt werden. Weist die urethangruppenhaltige Verbindung zwei oder mehr Isocyanatgruppen pro Molekül auf, können diese die Polyisocyanate (a) ganz oder teilweise ersetzen. Die Umsetzung erfolgt üblicherweise bei Temperaturen zwischen 20 und 120 °C, beispielsweise bei 80 °C. Das zur Herstellung der Urethangruppen enthaltenden Verbindung eingesetzte zweiten Isocyanat ist vorzugsweise ein Isomeres oder Homologes von Diphenylmethandiisocyanat. Besonders bevorzugt ist das zweite Isocyanat monomeres Diphenylmethandiisocyanat, beispielsweise 2,2'-Diphenylmethandiisocyanat, 2,4'- Diphenylmethandiisocyanat, 4,4'- Diphenylmethandiisocyanat oder eine Mischungen daraus. Dabei kann Diphenylmethandiisocyanat auch als Mischung mit seinen Derivaten eingesetzt werden. Dabei kann Diphenylmethandiisocyanat besonders bevorzugt bis 10 Gew.-%, weiter besonders bevorzugt bis zu 5 Gew.-%, carbodiimid, uretdion-, oder uretoniminmodifiziertes Diphenylmethandiisocyanat, insbesondere carbodiimid modifiziertes Diphenylmethandiisocyanat, enthalten. In einer besonders bevorzugten Ausführungsform sind das erste Isocyanat (a) und das zweite Isocyanat zur Herstellung der Urethangruppen haltigen Verbindung identisch.

Die Urethangruppen haltige Verbindung kann auch über alternative Reaktionswege erhalten werden, so zum Beispiel in dem ein Carbonat mit einem Monoamin zur Reaktion gebracht wird und eine Urethangruppe entsteht. Hierfür wird beispielsweise ein Propylencarbonat in leichtem Überschuß (1.1 eq.) mit einem Monoamin, z.B. einem Jeffamin M 600, bei 100 °C zur Reaktion gebracht. Das entstehende Urethan kann ebenfalls als Urethangruppe enthaltende Verbindung eingesetzt werden.

Die Mischungen enthaltend das Alkali- oder Erdalkalimetallsalze und eine Urethangruppen enthaltende Verbindung können beispielsweise durch Mischen des Alkali- oder Erdalkalimetallsalz in die Urethangruppen enthaltende Verbindung, beispielsweise bei Raumtemperatur oder bei erhöhter Temperatur, erhalten werden. Dazu kann jeder Mischer, beispielsweise ein einfacher Rührer, eingesetzt werden. Das Alkali- oder Erdalkalimetallsalz kann in diesem Fall als Reinsubstanz oder in Form einer Lösung, beispielsweise in ein- oder mehrfunktionellen Alkoholen, wie Methanol, Ethanol oder Kettenverlängerer (e), oder Wasser, eingesetzt werden. In einer besonders bevorzugten Ausführungsform wird dabei kommerziell erhältliches Praepolymerbasiertes Isocyanat direkt mit dem gelösten Salz versetzt. Hierfür geeignet sind z.B. Isocyanatprepolymere mit einem NCO-Gehalt von 15 bis 30 %, insbesondere auf Basis von Diphenylmethandiisocyanat und einem Polyetherpolyol. Solche Isocyanate sind beispielsweise kommerziell erhältlich von der BASF unter dem Handelsnamen Lupranat® MP 102.

In einer besonders bevorzugten Ausführungsform der vorliegenden Erfindung wird das Alkali- oder Erdalkalimetallsalz in einer Verbindung mit gegenüber Isocyanat reaktiven Wasserstoffatomen gelöst und anschließend, gegebenenfalls bei erhöhter Temperatur, mit dem Isocyanat vermischt.

Besonders bevorzugt wird zur Herstellung der Urethangruppenhaltigen Verbindung ein Monool mit einem Molekulargewicht von 30 bis 15 000 g/mol, bevorzugt 100 bis 900 g/mol und in einer besonders bevorzugten Ausführung von 400 bis 600 g/mol eingesetzt

Der Gehalt an Alkali- oder Erdalkalimetallionen pro Urethangruppe in der Verbindung (b) beträgt dabei 0,0001 bis 3,5, bevorzugt 0,01 bis 1,0, besonders bevorzugt 0,05 bis 0,9 und insbesondere 0,1 bis 0,8, jeweils bezogen auf die Anzahl der Alkali- oder Erdalkalimetallionen und Urethangruppen (pro Äquivalent Urethangruppen).

Der Gehalt an Alkali- oder Erdalkalimetallionen pro Isocyanatgruppe im ersten Polyisocyanat (a) sowie, falls vorhanden in der Komplexverbindung (b) beträgt vorzugsweise 0,0001 bis 0,3 besonders bevorzugt 0,0005 bis 0,02 und insbesondere 0,001 bis 0,01 Äquivalente, jeweils bezogen auf die Anzahl der Alkali- oder Erdalkalimetallionen und Urethangruppen.

Dabei besteht zwischen dem Alkali- oder Erdalkalimetallsalz in der Mischung (b) vorzugsweise bei 25 °C eine thermisch reversible Interaktion mit den urethangruppenhalteigen Verbindungen als Komponente (b), während bei Temperaturen größer 50 °C, vorzugsweise von 60 bis 200 °C und insbesondere von 80 bis 200 °C die katalytisch aktive Verbindung frei vorliegt. Im Sinn der Erfindung wird dabei von einer thermisch reversiblen Interaktion ausgegangen, wenn die offene Zeit der Reaktionsmischung bei 25 °C mindestens um den Faktor 5, besonders bevorzugt mindestens um den Faktor 10 und insbesondere mindestens um den Faktor 20 länger ist als bei 130 °C. Dabei wird die Offene Zeit bestimmt als die Zeit, in der die Viskosität der Reaktionsmischung bei konstanter Temperatur sich soweit erhöht, dass die erforderliche Rührkraft die gegebene Rührkraft des Shyodu Gel Timers, Typ 100, Version 2012 übersteigt. Hierzu wurden jeweils 200 g Reaktionsmischung angesetzt, in einem Speedmixer bei 1950 rpm 1 min vermischt und 130 g der Mischung bei Raumtemperatur oder erhöhter Reaktionstemperatur im Ofen in einem PP-Kunststoffbecher mit Durchmesser 7 cm mittels einem Shyodu Gel-Timer, Typ 100, Version 2012 und einem dazugehörigen Drahtrührer bei 20 rpm gerührt, bis die Viskosität und damit die erforderliche Rührkraft für die reaktive Mischung die Rührkraft des Gel-Timers überstieg.

Als eine oder mehrere Epoxidgruppen enthaltende Verbindung (c) können alle Epoxydhaltigen Verbindungen eingesetzt werden, die üblicherweise zur Herstellung von Epoxidharzen eingesetzt werden. Vorzugsweise sind die Epoxidgruppen enthaltende Verbindung (c) bei 25 °C flüssig. Dabei können auch Mischungen solcher Verbindungen eingesetzt werden, diese sind vorzugsweise ebenfalls bei 25 °C flüssig.

Beispiele für solche Epoxidgruppen haltigen Verbindungen, die im Rahmen der Erfindung eingesetzt werden können sind

I) Polyglycidyl and Poly([beta]-methylglycidyl) ester, erhältlich durch Reaktion einer Verbindung mit mindestens zwei Carboxylgruppen im Molekül und jeweils Epichlorohydrin und [Beta]-methylepichlorohydrin. Dabei wird die Reaktion vorteilhafterweise durch die Anwesenheit von Basen katalysiert.

Aliphatische Polycarbonsäuren können beispielsweise als Verbindung mit mindestens zwei Carboxylgruppen eingesetzt werden. Beispiele für solche aliphatischen Polycarbonsäuren sind Oxalsäure, Bernsteinsäure, Glutarsäure, Adipinsäure, Pimelinsäure, Korksäure, Azelainsäure und dimerisierte oder trimerisierte Linolsäure. Weiter könne auch cyclische, aliphatische Säuren, wie Tetrahydrophthalsäure, 4-Methyltetrahydrophthalsäure, Hexahydrophthalsäure oder 4-Methylhexa hydrophthalsäure eingesetzt werden. Auch aromatische Carbonsäuren, wie Phthalsäure, Isophthalsäure oder Terephthalsäure sowie beliebige Mischungen dieser Carbonsäuren können eingesetzt werden.

II) Polyglycidyl oder Poly([beta]-methylglycidyl) ether, erhältlich durch Reaktion einer Verbindung mit mindestens zwei Alkohol-Hydroxylgruppen und/oderphenolischen Hydroxylgruppen mit Epichlorohydrin oder [Beta]-methylepichlorohydrin unter alkalischen Bedingungen oder in Gegenwart eines sauren Katalysators und anschließender Behandlung mit einer Base.

Die Glycidylether diesen Typs sind beispielsweise abgeleitet von linearen Alkoholen, wie Ethylenglycol, Diethylenglycol oder hoheren Poly(oxyethylen)glycolen, Propan-1,2-diol oder Poly(oxypropylen)glycolen, Propan-1,3-diol, Butan-1,4-diol, Poly(oxytetramethylen)glycol, Pentan-1,5-diol, Hexan-1,6-diol, Hexan-2,4,6-triol, Glycerin, 1,1,1-Trimethylolpropan, Pentaerythritol oder Sorbitol, und von Polyepichlorohydrinen.

Weitere Glycidylether diesen Typs sind erhältlich von cycloaliphatischen Alkoholen, wie 1,4-Cyclohexanedimethanol, Bis(4-hydroxycyclohexyl)methan oder 2,2-Bis(4-hydroxycyclohexyl)propan, oder von Alkoholen, die aromatische Gruppen und/oder weitere funktionale Gruppen tragen, wie N,N-Bis(2-hydroxyethyl)anilin oder p,p'-Bis(2- hydroxyethylamino)-diphenylmethan.

Die Glycidylether können auch auf einkernigen Phenolen basiert sein, wie p-Tert-butylphenol, Resorcinol oder Hydrochinon, oder auf mehrkernigen Phenolen, wie Bis(4-hydroxyphenyl)methan, 4,4'-Dihydroxybiphenyl, Bis(4-hydroxyphenyl)sulfon, 1,1,2,2-Tetrakis(4-hydroxyphenyl)ethan, 2,2-Bis(4-hydroxyphenyl)propan oder 2,2-Bis(3,5-dibromo-4-hydroxyphenyl)propan.

Weitere Hydroxygruppenhaltige Verbindungen, die zur Herstellung der Glycidylether geeignet sind sind Novolacke, erhältlich durch Kondensation von Aldehyden, wie Formaldehyd, Acetaldehyd, Chloral- oder Furfuraldehyd, mit Phenolen oder Bisphenolen, die unsubstituiert oder substituiert sein können, beispielsweise mit Chloratomen oder C1 bis C9-Alkylgruppen, wie, Phenol, 4-Chlorophenol, 2- Methylphenol oder 4-Tert-butylphenol.

III) Poly(N-glycidyl)-Verbindungen, erhältlich durch Dehydrochlorierung von Reaktionsprodukten aus Epichlorohydrin mit Aminen, die zumindest zwei amingebundene Wasserstoffatome enthalten. Solche Amine sind beispielsweise Anilin, n-Butylamin, Bis(4-aminophenyl)methan, m-Xylylendiamin oder Bis(4-methylaminophenyl)methan. Die Poly(N-glycidyl)-Verbindungenschließen auch Triglycidylisocyanurate, N,N'-Diglycidylderivate von Cycloalkylenharnstoffen, wie Ethylenharnstoff oder 1,3-Propylenharnstoff, und Diglycidylderivate von Hydantoine, wie 5,5-Dimethylhydantoin.

IV) Poly(S-glycidyl)-Verbindungen, wie Di-S-glycidyl derivate, die erhältlich sind vonDithiolen, beispielsweise Ethan- 1,2-dithiol oder Bis(4-mercaptomethylphenyl)ether.

V) Cycloaliphatische Epoxyharze, wie Bis(2,3-epoxycyclopentyl)ether, 2,3-Epoxycyclopentylglycidylether, 1,2-Bis(2,3-epoxycyclopentyloxy)ethan oder 3,4-Epoxycyclohexylmethyl-3',4'-epoxycyclohexanecarboxylat.

VI) Monofunktionelle Epoxydharze, wie (2-Ethylhexyl)-glycidether, Isopropylglycidether, Butylglycidether oder Kresylglycidylether.

Es ist im Rahmen der Erfindung ebenfalls möglich Epoxyharze einzusetzen, bei denen die 1,2-Epoxygruppe an unterschiedliche Heteroatome oder funktionelle Gruppen gebunden ist. Diese Verbindungen schließen N,N,O-Triglycidyl-Derivate von 4-Aminophenol, die Glycidyletherglycidylester von Salicylsäure, N-Glycidyl-N'-(2-glycidyloxypropyl)-5,5-dimethylhydantoin und 2-Glycidyloxy-1,3-bis(5,5-dimethyl-1-glycidylhydantoin-3-yl)propan ein.

Besonders bevorzugt als Komponente (c) sind die Verbindungen der Klassen (I) und (II), insbesondere die der Klasse (II).

Vorzugsweise wird die eine oder mehrere Epoxidgruppen enthaltende Verbindung (c) in einer Menge eingesetzt, dass das Equivalentverhältnis von Epoxidgruppe zu Isocyanatgruppe der Polyisocyanate (a) sowie gegebenenfalls in der Komplexverbindung (b) enthaltenen Isocyanatgruppen 0,1 bis 2,0, vorzugsweise 0,2 bis 1,8 und besonders bevorzugt 0,3 bis 1,0 beträgt. Dabei führt ein höherer Epoxidanteil zu einer höheren Exothermie und damit in der Regel zu einer schnelleren Aushärtung bei erhöhter Temperatur und umgekehrt.

Der Gehalt an Alkali- oder Erdalkalimetallionen pro Epoxygruppe ist vorzugsweise größer als 0,00001 und beträgt besonders bevorzugt 0,00005 bis 0,3, jeweils bezogen auf die Anzahl der Alkali- oder Erdalkalimetallionen und Epoxygruppen.

Als Polyole (d) können im Rahmen dieser Erfindung Verbindungen mit mindestens zwei gegenüber Isocyanaten reaktiven Gruppen eingesetzt werden, die ein Molekulargewicht von mindestens 350, vorzugsweise mindestens 400 g/mol und besonders bevorzugt mindestens 500 g/mol aufweisen. Als gegenüber Isocyanat reaktive Gruppen können Gruppen, wie OH-, SH-, NH- und CH-acide Gruppen enthalten sein. Vorzugsweise weisen die Polyole im Wesentlichen OH-Gruppen, besonders bevorzugt ausschließlich OH-Gruppen als gegenüber Isocyanat reaktive Gruppen auf. In einer bevorzugten Ausführungsform weisen die Polyole mindestens 40 % bevorzugt mindestens 60 %, besonders bevorzugt mindestens 80 % und insbesondere mindestens 95 % sekundäre OH-Gruppen, bezogen auf die Anzahl an gegenüber Isocyanaten reaktiven Gruppen, auf.

Als Polyole (d) können beispielsweise in der Polyurethanchemie bekannte Polyether, Polycarbonatpolyole oder Polyester eingesetzt werden. Die bevorzugt zur Anwendung kommenden Polyole sind Polyetherole und/oder Polyesterole mit zahlenmittleren Molekulargewichten zwischen 350 und 12000, bevorzugt 400 bis 6000, insbesondere 500 bis weniger als 3000, und bevorzugt einer mittleren, nomionalen Funktionalität von 2 bis 6, bevorzugt 2 bis 3. Dabei werden die zahlenmittleren Molekulargewichte üblicherweise über die Bestimmung der OH Zahl gemäß DIN 53240 und anschließender Berechnung nach der Formel Mₙ= Fn ^{∗} 1000 ^{∗} 56,1 / OH-Zahl erhalten, wobei als Funktionalität die nominale Funktionalität verwendet wird..

Der Einsatz von Polyol (d) ist optional. Vorzugsweise wird Polyol (d) eingesetzt. Dabei beträgt der Anteil von Polyol (d), bezogen auf das Gesamtgewicht der Komponenten (c), (d) und (e) vorzugsweise von 10 bis 90 Gew.-%, besonders bevorzugt von 40 bis 85 Gew.-% und insbesondere von 60 bis 80 Gew.-%.

Gewöhnlich werden Polyetherole und/oder Polyesterole mit 2 bis 8 mit Isocyanat reaktiven Wasserstoffatomen eingesetzt. Die OH-Zahl dieser Verbindungen liegt üblicherweise im Bereich von 30 bis 850 mg KOH /g , vorzugsweise im Bereich von 50 und 600 mg KOH/g.

Die Polyetherole werden nach bekannten Verfahren, beispielsweise durch anionische Polymerisation von Alkylenoxiden unter Zusatz mindestens eines Startermoleküls, das 2 bis 8, vorzugsweise 2 bis 6 und besonders bevorzugt 2 bis 4 reaktive Wasserstoffatome gebunden enthält, in Gegenwart von Katalysatoren erhalten. Als Katalysatoren können Alkalihydroxide, wie Natrium- oder Kaliumhydroxid oder Alkalialkoholate, wie Natriummethylat, Natrium- oder Kaliumethylat oder Kaliumisopropylat, oder bei kationischer Polymerisation Lewis-Säuren, wie Antimonpentachlorid, Bortrifluorid-Etherat oder Bleicherde als Katalysatoren eingesetzt werden. Weiter können als Katalysatoren auch Doppelmetallcyanidverbindungen, sogenannte DMC-Katalysatoren, eingesetzt werden. Für Polyetherole mit Hydroxyzahlen > 200 mg KOH/g kann als Katalysator auch ein tertiäres Amin, wie zum Beispiel Imidazol, eingesetzt werden. Solche Polyole werde beispielsweise in WO 2011/107367 beschrieben.

Vorzugsweise werden als Alkylenoxide eine oder mehrere Verbindungen mit 2 bis 4 Kohlenstoffatomen im Alkylenrest, wie Tetrahydrofuran, 1,2-Propylenoxid, oder 1,2- bzw. 2,3-Butylenoxid, jeweils alleine oder in Form von Mischungen, und vorzugsweise 1,2-Propylenoxid, 1,2 Butylenoxid und/oder 2,3-Butylenoxid, insbesondere 1,2-Propylenoxid eingesetzt.

Als Startermoleküle kommen beispielsweise Ethylenglycol, Diethylenglycol, Glycerin, Trimethylolpropan, Pentaerythrit, Zuckerderivate, wie Saccharose, Hexitderivate, wie Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin sowie andere zwei oder mehrwertige Alkohole oder ein oder mehrwertige Amine in Betracht.

Die eingesetzten Polyesteralkohole werden zumeist durch Kondensation von mehrfunktionellen Alkoholen mit 2 bis 12 Kohlenstoffatomen, wie Ethylenglycol, Diethylenglycol, Butandiol, Trimethylolpropan, Glycerin oder Pentaerythrit, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure und den Isomeren von Naphthalindicarbonsäuren oder deren Anhydriden, hergestellt.

Als weitere Ausgangsstoffe bei der Herstellung der Polyester können auch hydrophobe Stoffe mitverwendet werden. Bei den hydrophoben Stoffen handelt es sich um wasserunlösliche Stoffe die einen unpolaren organischen Rest enthalten sowie über mindestens eine reaktive Gruppe, ausgewählt aus Hydroxyl, Carbonsäure, Carbonsäurester oder Mischungen daraus, verfügen. Das Äquivalentgewicht der hydrophoben Materialen liegt vorzugsweise zwischen 130 und 1000 g/mol. Verwendet werden können zum Beispiel Fettsäuren, wie Stearinsäure, Ölsäure, Palmitinsäure, Laurinsäure oder Linolsäure, sowie Fette und Öle, wie zum Beispiel Rizinusöl, Maisöl, Sonnenblumenöl, Sojabohnenöl, Kokosnussöl, Olivenöl oder Tallöl. Enthalten Polyester hydrophobe Stoffe, beträgt der Anteil der hydrophoben Stoffe am Gesamtmonomergehalt des Polyesteralkohols vorzugsweise 1 bis 30 Mol-%, besonders bevorzugt 4 bis 15 Mol-%.

Die eingesetzten Polyesterole haben vorzugsweise eine Funktionalität von 1,5 bis 5, besonders bevorzugt 1,8 - 3,5.

Zur Herstellung besonders hydrophober Reaktionsmischungen, beispielsweise wenn das Einkondensieren von Wasser während der langen offenen Zeit verhindert werden soll oder wenn das erfindungsgemäße Polyurethan besonders hydrolysestabil sein soll, kann als Polyol auch eine hydroxylfunktionalisierte hydrophobe Verbindung, wie eine hydroxyfunktionalisierte fettchemische Verbindung, eingesetzt werden.

Es sind eine Reihe von hydroxylfunktionellen fettchemischen Verbindungen bekannt, die verwendet werden können. Beispiele sind Rizinusöl, mit Hydroxylgruppen modifizierte Öle wie Traubenkernöl, Schwarzkümmelöl, Kürbiskernöl, Borretschsamenöl, Sojaöl, Weizenkeimöl, Rapsöl, Sonnenblumenöl, Erdnussöl, Aprikosenkernöl, Pistazienkernöl, Mandelöl, Olivenöl, Macadamianussöl, Avocadoöl, Sanddornöl, Sesamöl, Haselnussöl, Nachtkerzenöl, Wildrosenöl, Hanföl, Distelöl, Walnussöl, mit Hydroxylgruppen modifizierte Fettsäureester auf Basis von Myristoleinsäure, Palmitoleinsäure, Ölsäure, Vaccensäure, Petroselinsäure, Gadoleinsäure, Erucasäure, Nervonsäure, Linolsäure, Linolensäure, Stearidonsäure, Arachidonsäure, Timnodonsäure, Clupanodonsäure, Cervonsäure. Bevorzugt eingesetzt werden hierbei das Rizinusöl und dessen Umsetzungsprodukte mit Alkylenoxiden oder Keton-Formaldehyd-Harzen. Letztgenannte Verbindungen werden beispielsweise von der Bayer AG unter der Bezeichnung Desmophen® 1150 vertrieben.

Eine weitere bevorzugt eingesetzte Gruppe von fettchemischen Polyolen kann durch Ringöffnung epoxidierter Fettsäureester bei gleichzeitiger Umsetzung mit Alkoholen und gegebenenfalls folgenden weiteren Umesterungsreaktionen gewonnen werden. Der Einbau von Hydroxylgruppen in Öle und Fette erfolgt in der Hauptsache durch Epoxydierung der in diesen Produkten enthaltenen olefinischen Doppelbindung gefolgt von der Umsetzung der gebildeten Epoxidgruppen mit einem ein- oder mehrwertigen Alkohol. Dabei wird aus dem Epoxidring eine Hydroxylgruppe oder bei mehrfunktionellen Alkoholen eine Struktur mit einer höheren Anzahl an OH-Gruppen. Da Öle und Fette meist Glyzerinester sind, laufen bei den oben genannten Reaktionen noch parallele Umesterungsreaktionen ab. Die so erhaltenen Verbindungen haben vorzugsweise ein Molekulargewicht im Bereich zwischen 500 und 1500 g/mol. Derartige Produkte werden beispielsweise von der Firma BASF unter der Produktbezeichung Sovermole® angeboten.
In einer besonders bevorzugten Ausführungsform der Erfindung wird als Polyol (d) Ricinusöl, besonders bevorzugt ausschließlich Ricinusöl, eingesetzt.

Auch Polyetherol/Polyesterol-Hybrid-Polyole, wie unter WO 2013/127647 und WO 2013/110512 beschrieben, können als Polyole eingesetzt werden.

Zur Modifizierung der mechanischen Eigenschaften, z.B. der Härte, kann sich der Zusatz von Kettenverlängerungsmitteln, Vernetzungsmitteln oder gegebenenfalls auch Gemischen davon als vorteilhaft erweisen. Bei der Herstellung eines erfindungsgemäßen Verbundstoffs kann ein Kettenverlängerungsmittel (e) eingesetzt werden. Dabei kann auch jedoch auf das Kettenverlängerungsmittel (e) verzichtet werden.

Werden niedermolekulare Kettenverlängerungsmittel und/oder Vernetzungsmittel (e) eingesetzt, können bei der Herstellung von Polyurethanen bekannten Kettenverlängerer eingesetzt werden. Dies sind vorzugsweise niedermolekulare Verbindungen mit mindestens zwei gegenüber Isocyanaten reaktiven Gruppen mit Molekulargewichten kleiner als 500 g/mol, besonders bevorzugt von 60 bis kleiner als400 g/mol und insbesondere 60 bis kleiner als 350 g/mol eingesetzt. In Betracht kommen beispielsweise aliphatische, cycloaliphatische und/oder araliphatische oder aromatische Diole mit 2 bis 14, vorzugsweise 2 bis 10 Kohlenstoffatomen, wie Ethylenglykol, 1,3-Propandiol, 1,4-Butandiol, 1,6-Hexandiol, 1,10-Decandiol und Bis-(2-hydroxyethyl)-hydrochinon, 1,2-, 1,3-, 1,4-Dihydroxycyclohexan, Diethylenglykol, Dipropylenglykol, Tripropylenglykol, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle Weitere mögliche niedermolekulare Kettenverlängerungsmittel und/oder Vernetzungsmittel sind beispielsweise im "Kunststoffhandbuch, Band 7, Polyurethane", Carl Hanser Verlag, 3. Auflage 1993, Kapitel 3.2 und 3.3.2 angegeben. Vorzugsweise wird kein Kettenverlängerungsmittel eingesetzt.

Als Füllstoffe und weitere Additive (f) können übliche Füllstoffe, und sonstige Zusatzstoffe, wie Additive zur Wasseradsorption, Flammschutzmittel, Hydrolyseschutzmittel, Antioxidantien und interne Trennmittel eingesetzt werden. Solche Substanzen sind beispielsweise in "Kunststoffhandbuch, Band 7, Polyurethane", Carl Hanser Verlag, 3. Auflage 1993, Kapitel 3.4.4 und 3.4.6 bis 3.4.11 genannt.

Als Füllstoffe, insbesondere verstärkend wirkende Füllstoffe, sind die an sich bekannten, üblichen organischen und anorganischen Füllstoffe, Verstärkungsmittel usw. zu verstehen. Im Einzelnen seien beispielhaft genannt: anorganische Füllstoffe wie silikatische Mineralien, beispielsweise Quarzmehle, Schichtsilikate, wie Antigorit, Serpentin, Hornblenden, Amphibole, Chrisotil, und Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas und andere. Vorzugsweise verwendet werden Kaolin (China Clay), Quarzmehle, Aluminiumsilikat und Copräzipitate aus Bariumsulfat und Aluminiumsilikat sowie natürliche und synthetische faserförmige Mineralien wie Wollastonit, Metall- und Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.

Vorzugsweise werden als Füllstoffe solche mit einem mittleren Teilchendurchmesser von 0,1 bis 500, besonders bevorzugt von 1 bis 100 und insbesondere von 1 bis 10 µm eingesetzt. Dabei wird unter Durchmesser bei nicht kugelförmigen Teilchen deren Ausdehnung entlang der kürzesten Raumachse verstanden. Bei nicht kugelförmigen Teilchen, beispielsweise Fasern, wie Glasfasern, ist die Ausdehnung entlang ihrer längsten Raumachse vorzugsweise kleiner 500 µm, besonders bevorzugt kleiner 300 µm. Bevorzugt werden als Füllstoffe Glasfasern oder Quarzmehle eingesetzt. Weiter können auch vernetzte Füllstoffe, beispielsweise Gewebematten, wie Glasfasermatten, Carbonfasermatten oder Naturfasermatten als Füllstoffe eingesetzt werden. Diese Füllstoffe werden im Rahmen der Erfindung als Verstärkungsmittel bezeichnet.

Die anorganischen und organischen Füllstoffe können einzeln oder als Gemische verwendet werden und werden der Reaktionsmischung vorteilhafterweise in Mengen von 0,5 bis 30 Gew.-%, vorzugsweise 1 bis 20 Gew.-%, bezogen auf das Gewicht der Komponenten (a) bis (e), einverleibt.

Als Additive zur Wasseradsorption werden vorzugsweise Aluminosilikate, ausgewählt aus der Gruppe der Natriumaluminasilikate, Kaliumaluminasilikate Calciumaluminasilikate Cäsiumaluminasilikate, Bariumaluminasilikate, Magnesiumaluminasilikate Strontiumaluminasilikate Natriumaluminophosphate, Kaliumaluminophosphate, Calciumaluminophosphate und Mischungen davon, verwendet. Besonders bevorzugt werden Mischungen von Natrium-, Kalium- und Calciumaluminasilikaten in Ricinusöl als Trägersubstanz verwendet.

Vorzugsweise hat das Additivs zur Wasserabsorption eine mittlere Partikelgröße von nicht größer als 200 µm, besonders bevorzugt nicht größer als 150 µm und insbesondere nicht größer als 100 µm. Vorzugsweise beträgt die Porenweite des erfindungsgemäßen Additivs zur Wasserabsorption 2 bis 5 Ängstroem. Neben den anorganischen Additiven zur Wasseradsorption können auch bekannte organische Additive zur Wasseradsorption, wie Orthoformiate, beispielsweise Triisopropylorthoformiat, eingesetzt werden.

Wenn ein Additiv zur Wasserabsorption zugegeben wird, geschieht dies vorzugsweise in Mengen größer einem Gewichtsteil, besonders bevorzugt im Bereich von 1,2 bis 2 Gewichtsteilen, bezogen auf das Gesamtgewicht des Polyisocyanuratsystems.

Sollen Polyurethanschaumstoffe hergestellt werden, können anstelle von Wasserfängern auch in der Polyurethanchemie übliche chemische und/oder physikalische Treibmittel eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale oder Mischungen daraus, beispielsweise cyclo)aliphatische Kohlenwasserstoffe mit 4 bis 8 Kohlenstoffatomen, oder Fluorkohlenwasserstoffe, wie Solkane® 365 mfc der Firma Solvay Fluorides LLC. Vorzugsweise wird kein Treibmittel zugegeben.

Als Flammschutzmittel können im allgemeinen die aus dem Stand der Technik bekannten Flammschutzmittel verwendet werden. Geeignete Flammschutzmittel sind beispielsweise bromierte Ether (Ixol B 251), bromierte Alkohole, wie Dibromneopentylakohol, Tribromneopentylalkohol und PHT-4-Diol, sowie chlorierte Phosphate, wie z.B. , Tris-(2-chlorethyl)phosphat, Tris-(2-chlorisopropyl)phosphat (TCPP), Tris(1,3-dichlorisopropyl)phosphat, Tris-(2,3-dibrom-propyl)phosphat und Tetrakis-(2-chlorethyl)-ethylendiphosphat, oder Mischungen daraus. Außer den bereits genannten halogensubstituierten Phosphaten können auch anorganische Flammschutzmittel, wie roter Phosphor, roten Phosphor enthaltende Zurichtungen, expandierbarer Graphit (Blähgraphit), Aluminiumoxidhydrat, Antimontrioxid, Arsenoxid, Ammoniumpolyphosphat und Calciumsulfat oder Cyanursäurederivate, wie Melamin, oder Mischungen aus mindestens zwei Flammschutzmitteln, wie Ammoniumpolyphosphaten und Melamin sowie gegebenenfalls Stärke, zum Flammfestmachen der erfindungsgemäß hergestellten Polyurethan-Hartschaumstoffe verwendet werden.

Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden.

Die Flammschutzmittel werden im Rahmen der vorliegenden Erfindung bevorzugt in einer Menge von 0 bis 60 Gew.-%, besonders bevorzugt von 5 bis 50 Gew.-%, insbesondere von 5 bis 40 Gew.-%, bezogen auf das Gesamtgewicht der Komponenten (b) bis (e) verwendet.

Als interne Trennmittel können alle bei der Herstellung von Polyurethanen üblichen Trennmittel verwendet werden, beispielsweise in Diamin gelöste Metallsalze, wie Zinkstearat, und Derivate von Polyisobutylenbersteinsäure.

Ein erfindungsgemäßes Polyuretansystem weist vorzugsweise weniger als 0,5 Gew.-%, bevorzugt weniger als 0,3 Gew.-% Wasser, bezogen auf das Gesamtgewicht der Komponenten (b) bis (e), auf.

Die Herstellung der erfindungsgemäßen Polyurethane erfolgt durch Vermischen der Komponenten (a) bis (c) und gegebenenfalls (d) bis (f) zu einer Reaktionsmischung und Ausreagieren der Reaktionsmischung zum Polyurethan. Dabei wird im Rahmen der Erfindung die Mischung der Komponenten (a) bis (f) bei Reaktionsumsätzen kleiner 90 %, bezogen auf die Isocyanatgruppen, als Reaktionsmischung bezeichnet. Einzelne Komponenten können dabei bereits vorgemischt sein. So können beispielsweise Polyisocyanate (a) und die Mischung, erhältlich durch Einbringen eines Alkali- oder Erdalkalimetallsalzes in eine Urethangruppen enthaltende Verbindung (b) vorgemischt werden sofern die Komponente (b) keine gegenüber Isocyanaten reaktive Gruppen aufweist. Ebenfalls können die Komponenten (c), (d), (e) und (f) vorgemischt werden. Sollte die Komponente (b) keine Isocyanatgruppen enthalten, kann auch die Komponente (b) zu dieser Mischung zugegeben werden.

Erfindungsgemäße Reaktionsmischungen weisen eine lange offene Zeit bei 25 °C auf, beispielsweise von mehr als 60 Minuten, bevorzugt von mehr als 90 Minuten und besonders bevorzugt von mehr als 120 Minuten. Die Offene Zeit wird dabei wie oben beschrieben über den Viskositätsanstieg ermittelt. Bei Temperaturerhöhung auf Temperaturen größer 70 °C, bevorzugt größer 80 bis 200 °C und besonders bevorzugt auf 90 bis 150 °C härtet die erfindungsgemäße Reaktionsmischung schnell aus, beispielsweise in weniger als 50 Minuten, vorzugsweise in weniger als 30 Minuten, besonders bevorzugt in weniger als 10 Minuten und insbesondere in weniger als 5 Minuten. Dabei wird im Rahmen der Erfindung unter Aushärtung einer erfindungsgemäßen Reaktionsmischung die Erhöhung der Anfangsviskosität auf das 10-fache der Anfangsviskosität verstanden. Dabei ist die Differenz zwischen der Offenen Zeit bei 25 °C und der Offenen Zeit bei 130 °C vorzugsweise mindestens 40 Minuten, bevorzugt mindestens eine Stunde und besonders bevorzugt mindestens 2 Stunden.

Der Isocyanatindex kann für ein erfindungsgemäßes Verfahren in weiten Bereichen variiert werden, beispielsweise von 40 bis 10.000, vorzugsweise von 50 bis 10.000. Beispielsweise kann der Index insbesondere für weichere Produkte im Bereich von 90 bis 400, vorzugsweise 95 bis 300 liegen, insbesondere für härtere Produkte liegt dieser über 400, wie 401 bis 2000, besonders bevorzugt 450 bis 1500 und insbesondere 450 bis 1000. Dadurch können die Materialeigenschaften beeinflusst werden. Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel und Verbindungen mit Epoxid-gruppen, verstanden, nicht aber die Isocyanatgruppe selbst

Vorzugsweise wird mit dem erfindungsgemäßen Verfahren ein kompaktes Material erhalten, das heißt, es wird kein Treibmittel zugegeben. Geringe Treibmittelmengen, beispielsweise geringe Wassermengen, die über Luftfeuchtigkeit beim Verarbeiten in die Reaktionsmischung oder die Ausgangskomponenten Einkondensieren sind dabei nicht umfasst. Als kompaktes Polyurethan wird ein Polyurethan bezeichnet, das im Wesentlichen frei von Gaseinschlüssen ist. Vorzugsweise ist die Dichte eines kompakten Polyurethan größer 0,8 g/cm³, besonders bevorzugt größer 0,9 g/cm³ und insbesondere größer 1,0 g/cm³.

Die erfindungsgemäßen Polyurethane können für alle Arten von Polyurethanen eingesetzt werden zu deren Herstellung eine lange offene Zeit und eine schnelle Aushärtung der Reaktionsmischung vorteilhaft sind. Dabei wird bei einem Isocyanatindex von größer 150, besonders bevorzugt von größer 400 gewählt, wenn die erhaltenen Polyurethane eine besondere Temperaturstabilität und Flammfestigkeit aufweisen sollen. Dabei weisen die erfindungsgemäßen Polyurethane eine besonders hohe Glasübergangstemperatur auf. Auch sind transparente Polyurethane herstellbar. Vorzugsweise wird das erfindungsgemäße Verfahren zur Herstellung von Faserverbundbauteilen eingesetzt. Dazu werden übliche Fasern, wie Glasfasern oder Kohlefasern, insbesondere Fasermatten, mit der Reaktionsmischung benetzt. Weiter kann die erfindungsgemäße Reaktionsmischung verwendet werden, um Wabenverbundmaterialien herzustellen, wie Türelemente im Automobilbau. Auch kann die Reaktionsmischung im Vakuuminfusionsverfahren zur Herstellung von strukturellen Sandwichbauteilen, wie Automobilaußenverkleidungen oder Flügeln für Windenergieanlagen eingesetzt werden. Weitere Verwendungen sind beispielsweise Pultrusion, Faserwickelverfahren und alle Anwendungen, bei denen eine lange offene Zeit und schnelles Aushärten der Kunststoffkomponente vorteilhaft ist. Dabei können diese Gegenstände nach üblichen Verfahren in üblichen, vorzugsweise beheizbaren Formwerkzeugen hergestellt werden.

Vorzugsweise werden bis auf das in Komponente (b) eingesetzte Alkali- oder Erdalkalimetallsalz im erfindungsgemäßen Verfahren keine Verbindungen zur Beschleunigung der Isocyanat-Polyol-Reaktion und insbesondere keine der üblichen Polyurethankatalysatoren auf Basis von Verbindungen mit tertiären Amingruppen, eingesetzt. Die erfindungsgemäßen Polyurethane zeichnen sich durch hervorragende mechanische Eigenschaften aus, die innerhalb von weiten Grenzen variiert werden können.

Gegenstand der vorliegenden Erfindung ist weiter das Polyurethan, erhältlich nach einem erfindungsgemäßen Verfahren und die Verwendung eines erfindungsgemäßen Polyurethans zur Herstellung einer Vielzahl von Kompositmaterialien, beispielsweise in Resin Transfer Moulding (RTM), Resin Injection Moulding (RIM) oder Structural Reaction Injection Molding (SRIM), um beispielsweise Karosseriebauteile für Fahrzeuge, Tür oder Fensterrahmen oder wabenverstärkte Bauteile herzustellen, in Vakuum assistierter Harzinfusion um beispielsweise Strukturbauteile für Fahrzeuge oder Windkraftanlagen herzustellen, in Filament Winding um beispielsweise Druckstabile Behältnisse oder Tanks herzustellen, in Rotational Casting um z.B. Rohre und Rohrbeschichtungen herzustellen und in Pultrusion, um beispielsweise Tür- und Fensterprofile, faserverstärkte Bauteile für Fahrzeuge, Windkraftanlagen, Antennen oder Leitern und Bewehrungsstäbe für Beton herzustellen. Des Weiteren kann das erfindungsgemäße Polyurethan für die Herstellung von Prepregs für beispielsweise Sheet Moulding Compounding (SMC) oder Bulk Molding Compound (BMC) verwendet werden. Die Verbundstoffe mit dem erfindungsgemäß hergestellten Polyurethan können des Weiteren für beispielsweise großstückzahlige Produktion von Teilen für Fahrzeuge, Bauteile für Züge, Luft- und Raumfahrt, marine Anwendungen, Windkraftanlagen, Strukturbauteile, Klebstoffe, Packaging, Verkapselungsstoffe und Isolatoren verwendet werden. Das erfindungsgemäße Polyurethan kann auch ohne Faserverstärkung als reines Gussmaterial verwendet werden, beispielsweise als Kleber oder Coating für beispielsweise Rohrbeschichtungen. Vorzugsweise wird das nach einem erfindungsgemäßen Verfahren hergestellte Polyurethan zur Herstellung von Karosseriebauteilen für Fahrzeuge, wie Stoßstangen, Kotflügel oder Dachteile, eingesetzt.

Im Folgenden soll die gegenwärtige Erfindung anhand von Beispielen verdeutlicht werden:

### Ausgangsmaterialien:

- Polyol 1: Rizinusöl
- Polyol 2: Glyceringestartetes Polypropylenoxid, Funktionalität =3, OHZ = 400 mg KOH/g
- Polyol 3: Polyester basierend auf Adipinsäure, Funktionalität = 2, OHZ = 56 mg KOH/g
- GDE 1: Trimethylolpropane triglycidyl ether
- GDE 2: Bisphenol A basierter Diglycidylether, z.B. Araldite GY 250 der Fa. Huntsman
- ZM1: Triisopropylorthoformat
- ZM 2: Reaktionsprodukt bestehend aus Ethanol und Iso 1
- ZM3: Reaktionsprodukt bestehend aus Iso 1 mit einem monofunktionalen Polyethylenoxid mit einem zahlenmittleren Molekulargewicht von 500 g/mol, erhältlich unter dem Handelsnamen "Pluriol® A 500 E" der Fa. BASF
- Kat 1: Mischung aus LiCI und ZM3, 0,50 eq. LiCI bezogen auf Anzahl Urethanbindungen in ZM 3
- Kat 2: Mischung aus LiBr und ZM 2, 0,65 eq. LiBr bezogen auf Anzahl Urethanbindungen in ZM2
- Kat 3: Mischung aus MgCl₂ und ZM 2, 0,65 eq. MgCl₂ bezogen auf Anzahl Urethanbindungen in ZM2
- Kat 4: LiCI gesättigt in Ethanol gelöst, Konzentration rechnerisch 0,67 mol/L nach Knovel Critical Tables (2nd Edition)
- Kat 5: nicht erfindungsgemäße Mischung aus LiCI und Harnstoff-Prepolymer, erhältlich durch Reaktion von Jeffamin M600 und Iso 1 sowie 0,50 eq. LiCI, bezogen auf Anzahl Harnstoffbindungen des Praepolymers wie entsprechend in WO10121898 beschrieben.
- Iso 1: Carbodiimidmodifiziertes 4,4'-Diphenylmethandiisocyanat (MDI), z.B. "Lupranat MM 103" der Fa. BASF, NCO-Gehalt 29,5 %
- Iso 2: Diphenylmethandiisocyanat (MDI) mit höherkernigen Homologen, z.B. "Lupranat® M20" der Fa. BASF, NCO-Gehalt 31,5 %
- Iso 3: Prepolymer, erhältlich durch Umsetzen von Diphenylmethandiisocyaant, höherkerniger Homologe des Diphenylmethandiisocyanats und einem Polyetherol, Funktionalität 2,4, , NCO-Gehalt 28,5% (Lupranat® MP 105 der Fa. BASF)

Herstellung ZM 2 und 3: Das Monool wurde in einem Glaskolben vorgelegt und unter kräftigem Rühren mittels eines Magnetrührers das Isocyanat zugegeben. Während der gesamten Synthese wurde die Temperatur mittels Temperaturfühler überwacht. Dann wurde auf 70 °C erhitzt bis die Reaktion startete. Erhitzte sich die Reaktion von selbst, wurde mit Eisbad gekühlt, verhielt sich die Reaktion eher träge wurde die Temperatur weiterhin auf 90 °C erhöht und weitere 30 min gerührt. Nach Ende der Reaktion wurde das Reaktionsgemisch auf Raumtemperatur abgekühlt. Je nach Molekulargewicht des eingesetzten Monools erhielt man einen Feststoff oder ein viskoses Öl.

Herstellung Kat 1-3: Das jeweilge ZM 2 oder 3 wurde mit der entsprechenden, in Ethanol gelösten Menge LiCI vermischt und auf 70 °C erhitzt und für 30 min bei dieser Temperatur gerührt. Anschließend wurde das Reaktionsgemisch abgekühlt und überschüssiges Ethanol im Rotationsverdampfer abgezogen. Je nach Molekulargewicht des eingesetzten ZM erhielt man einen Feststoff oder ein viskoses Öl.

Gemäß Tabelle 1 wurden die angegebenen Komponenten 1 und 2 in den angegebenen Gewichtsverhältnissen bei Raumtemperatur in einem Speedmixer bei 1950 rpm für 1 min vermischt. Dann wurde bei Raumtemperatur aus den Komponenten 1 und 2 die Gesamtmischung mit Index 700 vermischt und in einem Speedmixer bei 1950 rpm für 1 min gerührt. Anschließend wurde die Gelzeit mithilfe des Shyodu Gel timers, Typ 100, Version 2012 bei 25 °C und bei 130 °C bestimmt.

**Tabelle 1**

| Komponente 1 | | | | Komponente 2 | | | | Offene Zeit | |
|---|---|---|---|---|---|---|---|---|---|
| Polyol 1 | GDE 1 | Kat 1 | Iso 1 | Iso 1 | Kat 1 | GDE 1 | Index | RT | 130 °C |
| 16,31 | 3,84 | - | - | 79,45 | 0,4 | - | 700 | mehrere Stunden | < 10 min |
| 16,31 | - | - | - | 79,45 | 0,4 | 3,84 | 700 | mehrere Stunden | < 10 min |
| 16,31 | - | - | - | 79,45 | 0,4 | 3,84 | 700 | mehrere Stunden | < 10 min |
| 16,31 | 3,84 | - | - | 79,45 | 0,4 | - | 700 | mehrere Stunden | < 10 min |
| 16,31 | - | 0,4 | - | 79,45 | - | 3,84 | 700 | mehrere Stunden | < 10 min |
| 16,31 | - | - | 79,45 | - | 0,4 | 3,84 | 700 | mehrere Stunden | < 10 min |
| 16,31 | - | 0,4 | - | 79,45 | - | 3,84 | 700 | mehrere Stunden | < 10 min |
| 16,31 | - | - | 79,45 | - | 0,4 | 3,84 | 700 | mehrere Stunden | < 10 min |
| 16,31 | 3,84 | 0,4 | - | 79,45 | - | - | 700 | mehrere Stunden | < 10 min |
| 16,31 | - | 0,4 | 79,45 | - | - | 3,84 | 700 | mehrere Stunden | < 10 min |
| 16,31 | 3,84 | 0,4 | - | 79,45 | - | - | 700 | mehrere Stunden | < 10 min |
| 16,31 | - | 0,4 | 79,45 | - | - | 3,84 | 700 | mehrere Stunden | < 10 min |
| 16,31 | 3,84 | 0,4 | 79,45 | - | - | - | 700 | mehrere Stunden | < 10 min |
| 16,31 | 3,84 | - | 79,45 | - | 0,4 | - | 700 | mehrere Stunden | < 10 min |
| 16,31 | 3,84 | 0,4 | 79,45 | - | - | - | 700 | mehrere Stunden | < 10 min |

Tabelle 1 zeigt, dass die Mischreihenfolge der Zugabe der erfindungsgemäßen Mischung (b), erhältlich durch Einbringen eines Alkali- oder Erdalkalimetallsalzes in eine Urethangruppen enthaltende Verbindung, sowohl in Komponente 1 als auch in Komponente 2 ohne Beeinflussung der latenten Reaktion erfolgen kann.

Gemäß Tabelle 2 wurden die angegebenen Komponenten bei Raumtemperatur in den angegebenen Gewichtsverhältnissen in einem Speedmixer bei 1950 rpm für 1 min vermischt. Anschließend wurde die Gelzeit mithilfe eines Shyodu Gel timers, Typ 100, Version 2012 bestimmt. Soweit nicht anders angegeben beziehen sich die Angaben auf Gewichtsteile. Dabei gibt die "Differenz offene Zeit" die Zeitspanne an, um die sich die offene Zeit bei Raumtemperatur und bei 130 °C unterscheidet.

**Tabelle 2**

| | Vergleich 1 | Vergleich 2 | Vergleich 3 | Vergleich 4 | Vergleich 5 | Beispiel 1 | Beispiel 2 | Beispiel 3 |
|---|---|---|---|---|---|---|---|---|
| Polyol 1 | 77,0 | 77,0 | 77,0 | 100,0 | 77,0 | 77,0 | 77,0 | 77,0 |
| Polyol 2 | | | | | | | | |
| Polyol 3 | | | | | | | | |
| GDE 1 | 20,0 | 20,0 | 20,0 | | 20,0 | 20,0 | 20,0 | 20,0 |
| GDE 2 | | | | | | | | |
| ZM1 | 3,0 | 3,0 | 3,0 | | 3,0 | 3,0 | 3,0 | 3,0 |
| Kat 1 | | | | | | 0,5 | | |
| Σ A Komp. | 100,0 | 100,0 | 100,0 | 100,0 | 100,0 | 100,5 | 100,0 | 100,0 |
| ZM 2 | | 5,0 | | | | | | |
| Kat 1 | | | | 0,5 | | | 0,5 | 0,5 |
| Kat 2 | | | | | | | | |
| Kat 3 | | | | | | | | |
| Kat 4 | | | 2,3 | | | | | |
| Kat 5 | | | | | 0,5 | | | |
| Iso 1 | | 95,0 | 97,7 | 99,5 | 99,5 | 100,0 | 99,5 | 99,5 |
| Iso 2 | | | | | | | | |
| Iso 3 | 100,0 | | | | | | | |
| Σ B Komp. | 100,0 | 100,0 | 100,0 | 100,0 | 100,0 | 100,0 | 100,0 | 100,0 |
| Index | 420 | 410 | 420 | 500 | 500 | 40 | 100 | 500 |
| Mischungsverhältnis | 100:245 | 100:243 | 100:242 | 100:515 | 100:327 | 100:24 | 100:57 | 100:283 |
| offene Zeit (RT) | kaum Reaktion, Viskoanstieg über Stunden | kaum Reaktion, Viskoanstieg über Stunden | 1 min | kaum Reaktion, Viskoanstieg über Stunden | über 1 Woche | über 1 Woche | mehrere Stunden | über 1 Woche |
| offene Zeit (130 °C) | kaum Reaktion, Viskoanstieg über Stunden | kaum Reaktion, Viskoanstieg über Stunden | 1 min | kaum Reaktion, Viskoanstieg über Stunden | 20 min | 10 min | 3 min | 6 min |
| Differenz offene Zeit | nicht messbar | nicht messbar | nicht messbar | nicht messbar | über 1 Woche | über 1 Woche | mehrere Stunden | über 1 Woche |

| | Beispiel 4 | Beispiel 5 | Beispiel 6 | Beispiel 7 | Beispiel 8 | Beispiel 9 | Beispiel 10 | Beispiel 11 |
|---|---|---|---|---|---|---|---|---|
| Polyol 1 | 77,0 | 77,0 | 77,0 | 77,0 | | 77,0 | | |
| Polyol 2 | | | | | 79,0 | | | |
| Polyol 3 | | | | | | | 77,0 | |
| GDE 1 | 20,0 | 20,0 | 20,0 | 20,0 | 21,0 | | 20,0 | 100,0 |
| GDE 2 | | | | | | 20,0 | | |
| ZM1 | 3,0 | 3,0 | 3,0 | 3,0 | | 3,0 | 3,0 | |
| Σ A Komp. | 100,0 | 100,0 | 100,0 | 100,0 | 100,0 | 100,0 | 100,0 | 100,0 |
| ZM 2 | | | | | | | | |
| Kat 1 | 0,5 | | | | 0,5 | 0,5 | 0,5 | 0,5 |
| Kat 2 | | | 5,0 | | | | | |
| Kat 3 | | | | 5,0 | | | | |
| Kat 4 | | 0,5 | | | | | | |
| Iso 1 | 99,5 | | 95,0 | 95,0 | 99,5 | 99,5 | 99,5 | 99,5 |
| Iso 2 | | | | | | | | |
| Iso 3 | | 99,5 | | | | | | |
| Σ B Komp. | 100,0 | 100,0 | 100,0 | 100,0 | 100,0 | 100,0 | 100,0 | 100,0 |
| Index | 1700 | 410 | 410 | 410 | 500 | 500 | 700 | 500 |
| Mischungsverhältnis | 100:962 | 100:293 | 100:307 | 100:307 | 100:312 | 100:265 | 100:263 | 100:1102 |
| offene Zeit (RT) | über 1 Woche | 20 min | mehrere Stunden | mehrere Stunden | mehrere Stunden | mehrere Stunden | mehrere Stunden | mehrere Stunden |
| offene Zeit (130 °C) | 10 min | 2 min | 10 min | 40 min | 10 min | 10 min | 10 min | 10 min |
| Differenz offene Zeit | über 1 Woche | 18 min | mehrere Stunden | mehrere Stunden | mehrere Stunden | mehrere Stunden | mehrere Stunden | mehrere Stunden |

Tabelle 2 zeigt, dass ohne Zugabe einer erfindungsgemäßen Mischung (b), erhältlich durch Einbringen eines Alkali- oder Erdalkalimetallsalzes in eine Urethangruppen enthaltende Verbindung, keine oder keine verzögerte Reaktion bei Raumtemperatur zu beobachten ist. Ohne Zugabe von Katalysator startet die Reaktion nicht (Vergleichsversuche 1 und 2). Mit Zugabe von Lithiumchlorid liegt sowohl bei Raumtemperatur als auch bei 130 °C die offene Zeit bei ca. einer Minute (Vergleich 3), eine verzögerte Reaktion ist nicht gegeben. Ohne Glycidylether ist ebenfalls keine ausreichende Reaktion zu beobachten (Vergleich 4). Verwendet man eine mit dem aus dem Salz stammenden Kation oder Anion gegenüber sich bidental verhaltende Struktur, z.B. Harnstoff(-NH-CO-NH-) wie der nicht erfindungsgemäße Kat 5 aus WO10121898 erhält man Systeme mit langer offener Zeit bei RT und einer vergleichsweise langsamen Aushärtung bei 130 °C (Vergleichsversuche 5 (6 hast du wieder raus) im Vergleich zu Beispiel 3 (Bsp 3 ist zum Vergleich, die haben beide Index 500)). Beispiele 1 bis 11 belegen, dass für unterschiedliche Isocyanatindices und unterschiedliche Verbindungen mit Isocyanatgruppen und verschiedenen Alkali- oder Erdalkalimetallsalz bei Raumtemperatur lange offene Zeiten erhalten werden, während bei 130 °C eine schnelle Aushärtung erreicht wird. Dabei ist die Anwesenheit von ausreichend Urethangruppen zur Bildung einer Epoxyverbindung ebenfalls wesentlich (Beispiel 5).

Tabelle 3a beschreibt Mischungen die mit Hilfe der erfindungsgemäßen Mischung (b) in verschiedenen Indices hergestellt wurden. Tabelle 3b beschreibt verschiedene weitere Mischungen, in denen neben dem Index auch weitere Mischungsverhältnisse der Komponenten variiert wurden.

Hierzu wurden die angegebenen Komponenten bei Raumtemperatur in den angegebenen Gewichtsverhältnissen in einem Speedmixer bei 1950 rpm für 1 min vermischt. Anschließend wurde das Gemisch in eine oben offene Aluminiumform mit den Maßen 30x20x0,2 cm gegeben und im Ofen bei 130 °C ausreagiert. Die Materialkennwerte in Tabelle 3a und b wurden gemäß den in den Tabellen 3 angegebenen Normen bestimmt.

**Tabelle 3a**

| | | Beispiel 11 | Beispiel 12 | Beispiel 1 [Tab 1] | Beispiel 13 | Beispiel 14 | Beispiel 2 [Tab 2] |
|---|---|---|---|---|---|---|---|
| Polyol 1 | | 77 | 77 | 77 | 77 | 77 | 77 |
| GDE1 | | 20 | 20 | 20 | 20 | 20 | 20 |
| ZM1 | | 3 | 3 | 3 | 3 | 3 | 3 |
| Σ A Komp. | | 100 | 100 | 100 | 100 | 100 | 100 |
| Iso 1 | | 99,5 | 99,5 | 99,5 | 99,5 | 99,5 | 99,5 |
| Kat 1 | | 0,5 | 0,5 | 0,5 | 0,5 | 0,5 | 0,5 |
| Σ B Komp. | | 100 | 100 | 100 | 100 | 100 | 100 |
| Index | | 50 | 90 | 100 | 150 | 250 | 500 |
| Mischungsverhältnis | | 100 : 28 | 100:51 | 100:57 | 100:85 | 100:142 | 100:283 |
| Härte | DIN 53505 | 26 A | 52 A | 67 A | 82 A | 77 D | 87 D |
| Zugfestigkeit [MPa] | DIN EN ISO 527 | nicht messbar | 8,6 | 16,3 | 26,7 | 61,7 | nicht messbar |
| Reißdehnung [%] | DIN EN ISO 527 | nicht messbar | 104 | 85 | 53 | 9 | nicht messbar |
| E-Modul [MPa] | DIN EN ISO 527 | nicht messbar | 20 | 13,9 | 267 | 1158 | nicht messbar |
| Weiterreißwiderstand [N/mm] | DIN ISO 34-1b B(b) | 2,1 | 6,6 | 24,4 | 51,2 | 19,2 | nicht messbar |

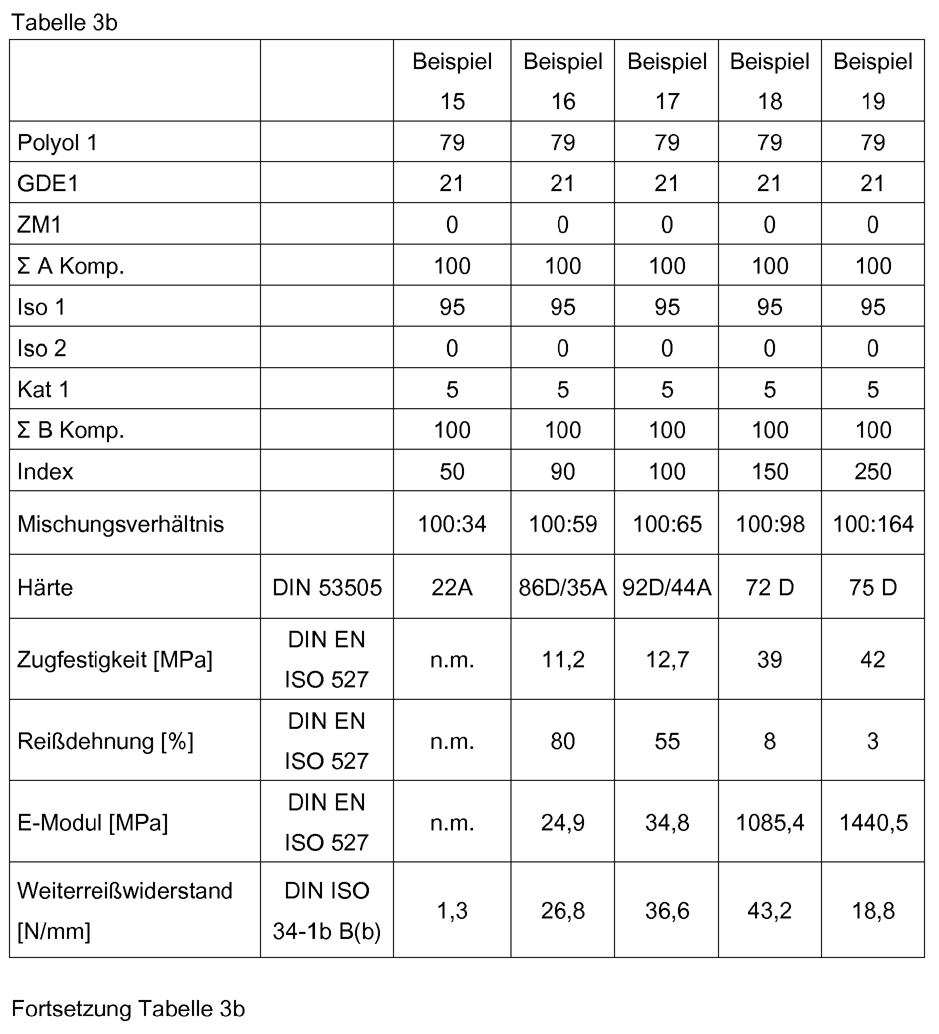

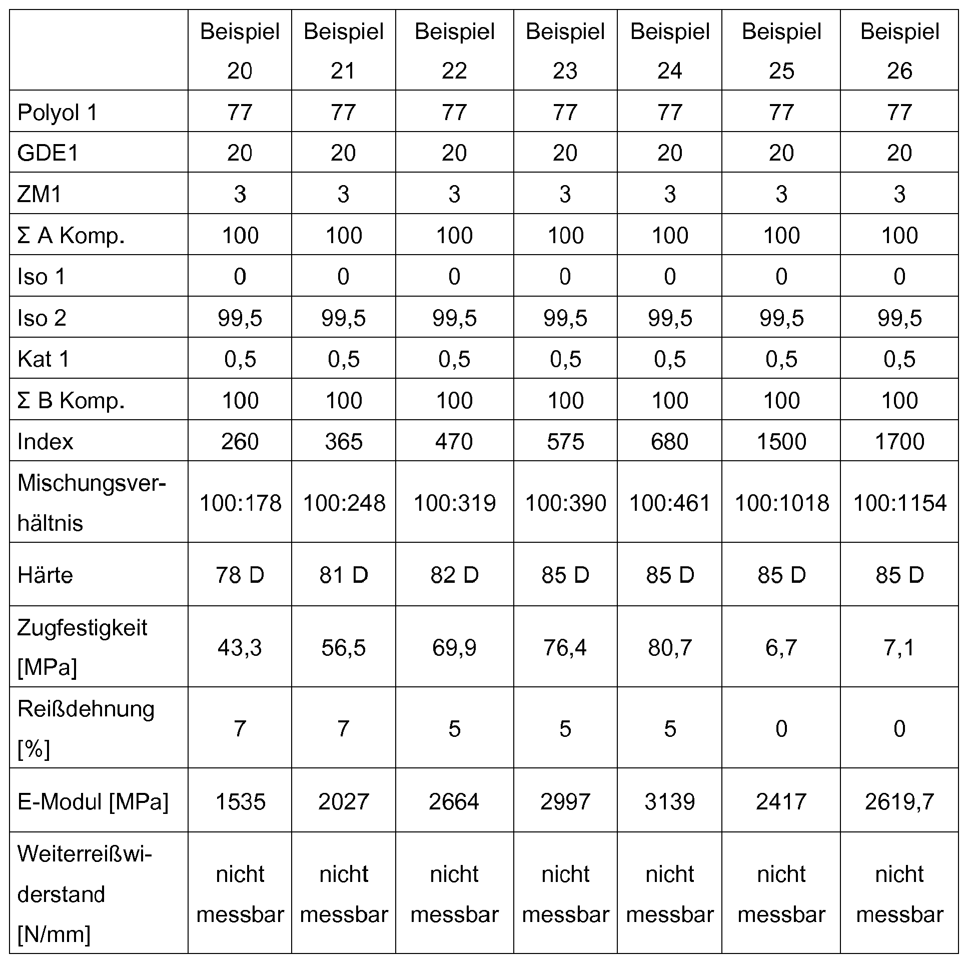

## Patentansprüche

1. Verfahren zur Herstellung von Polyurethanen, bei dem man
a) Polyisocyanat,
b) eine Mischung, erhältlich durch Einbringen eines Alkali- oder Erdalkalimetallsalzes in eine mindestens eine Urethangruppe enthaltende Verbindung R-NH-CO-O-R', die bei 20 °C fest oder flüssig vorliegt, wobei R ungleich Wasserstoff bzw. ungleich COR" ist,
c) eine oder mehrere Epoxidgruppen enthaltende Verbindung und gegebenenfalls,
d) Polyol,
e) Kettenverlängerer und
f) Füllstoffe und weitere Additive
zu einer Reaktionsmischung vermischt und zum Polyurethan ausreagieren lässt, wobei der Gehalt an Alkali- oder Erdalkalimetallionen pro Urethangruppe in der Verbindung (b) 0,0001 bis 3,5, bezogen auf die Anzahl der Alkali- oder Erdalkalimetallionen und Urethangruppen, beträgt.

2. Verfahren nach Anspruch 1, **dadurch gekennzeichnet, dass** als Polyisocyanat (a) ein erstes Polyisocyanat eingesetzt wird und die Urethangruppen enthaltende Verbindung in Komponente (b) erhältlich ist durch Umsetzung eines zweiten Polyisocyanats und Alkoholen.

3. Verfahren nach Anspruch 1, **dadurch gekennzeichnet, dass** als Polyisocyanat (a) ein erstes Polyisocyanat eingesetzt wird und die Urethangruppen enthaltende Verbindung in Komponente (b) ein Umsetzungsprodukt aus einem zweiten Polyisocyanat und einer Verbindung mit einer OH-Gruppe ist.

4. Verfahren nach Anspruch 1 oder 2, **dadurch gekennzeichnet, dass** als Urethangruppen enthaltende Verbindung in Komponente (b) ein Umsetzungsprodukt aus einem zweiten Polyisocyanat und einer Verbindung mit mindestens zwei OH-Gruppen eingesetzt wird, wobei das zweite Isocyanat in einem stöchiometrischen Überschuss eingesetzt wird.

5. Verfahren nach einem der Ansprüche 1 bis 4, **dadurch gekennzeichnet, dass** das zweite Isocyanat eines oder mehrere Isomere oder Homologe des Diphenylmethans enthält.

6. Verfahren nach einem der Ansprüche 2 bis 5, **dadurch gekennzeichnet, dass** das erste Polyisocyanat und das zweite Polyisocyanat identisch sind.

7. Verfahren nach einem der Ansprüche 1 bis 6, **dadurch gekennzeichnet, dass** der Gehalt an Alkali- oder Erdalkalimetallionen pro Isocyanatgruppe im ersten Polyisocyanat (a) sowie, falls vorhanden in der Komplexverbindung (b), 0,0001 bis 0,3, bezogen auf die Anzahl der Alkali- oder Erdalkalimetallionen und Urethangruppen beträgt.

8. Verfahren nach einem der Ansprüche 1 bis 7, **dadurch gekennzeichnet, dass** die Epoxidgruppen enthaltende Verbindung zwei, drei oder mehr Epoxidgruppen pro Molekül enthält.

9. Verfahren nach einem der Ansprüche 1 bis 8, **dadurch gekennzeichnet, dass** das Alkali- oder Erdalkalimetallsalz Lithiumchlorid ist.

10. Verfahren nach einem der Ansprüche 1 bis 9, **dadurch gekennzeichnet, dass** die Komplexverbindung (b) erhalten wird durch Mischen von Polyisocyanat, einer Verbindung mit einer gegenüber Isocyanat reaktiven Verbindung und dem Alkali- oder Erdalkalimetallsalz.

11. Verfahren nach einem der Ansprüche 1 bis 10, **dadurch gekennzeichnet, dass** die eine oder mehrere Epoxidgruppen enthaltende Verbindungen in einer Menge eingesetzt werden, dass das Equivalentverhältnis von Epoxidgruppe zu Isocyanatgruppe der Polyisocyanate (a) sowie gegebenenfalls in der Komplexverbindung (b) enthaltenen Isocyanatgruppen 0,1 bis 2,0 beträgt.

12. Verfahren nach einem der Ansprüche 1 bis 11, **dadurch gekennzeichnet, dass** man mit der Polyurethanreaktionsmischung auf ein Verstärkungsmittel aufträgt und anschließend zum Polyurethan ausreagieren lässt.

13. Polyurethan, erhältlich nach einem Verfahren gemäß einem der Ansprüche 1 bis 12.

14. Verwendung eines Polyurethans nach Anspruch 13 zur Herstellung von Karosseriebauteilen für Fahrzeuge.

## Claims

1. A process for preparing polyurethanes by mixing
a) polyisocyanate,
b) a mixture obtainable by introducing an alkali metal or alkaline earth metal salt into a compound R-NH-CO-O-R' comprising at least one urethane group, which is present in solid or liquid form at 20°C, where R is other than hydrogen and/or other than COR",
c) compound comprising one or more epoxide groups, and, optionally,
d) polyol,
e) chain extenders, and
f) fillers and further additives
to form a reaction mixture and fully reacting this mixture to give the polyurethane, where the amount of alkali metal or alkaline earth metal ions per urethane group in the compound (b) is 0.0001 to 3.5, based on the number of alkali metal or alkaline earth metal ions and urethane groups.

2. The process according to claim 1, wherein a first polyisocyanate is used as polyisocyanate (a) and the compound comprising urethane groups in component (b) is obtainable by reaction of a second polyisocyanate and alcohols.

3. The process according to claim 1, wherein a first polyisocyanate is used as polyisocyanate (a) and the compound comprising urethane groups in component (b) is a reaction product of a second polyisocyanate and a compound having an OH group.

4. The process according to claim 1 or 2, wherein use is made as compound comprising urethane groups in component (b) of a reaction product of a second polyisocyanate and a compound having at least two OH groups, the second isocyanate being used in a stoichiometric excess.

5. The process according to any of claims 1 to 4, wherein the second isocyanate comprises one or more isomers or homologs of diphenylmethane.

6. The process according to any of claims 2 to 5, wherein the first polyisocyanate and the second polyisocyanate are identical.

7. The process according to any of claims 1 to 6, wherein the amount of alkali metal or alkaline earth metal ions per isocyanate group in the first polyisocyanate (a) and, if present, in the complex compound (b) is 0.0001 to 0.3, based on the number of alkali metal or alkaline earth metal ions and urethane groups.

8. The process according to any of claims 1 to 7, wherein the compound comprising epoxide groups comprises two, three or more epoxide groups per molecule.

9. The process according to any of claims 1 to 8, wherein the alkali metal or alkaline earth metal salt is lithium chloride.

10. The process according to any of claims 1 to 9, wherein the complex compound (b) is obtained by mixing polyisocyanate, a compound with an isocyanate-reactive compound, and the alkali metal or alkaline earth metal salt.

11. The process according to any of claims 1 to 10, wherein the compounds comprising one or more epoxide groups are used in an amount such that the equivalents ratio of epoxide group to isocyanate group of the polyisocyanates (a) and also, optionally, isocyanate groups present in the complex compound (b) is 0.1 to 2.0.

12. The process according to any of claims 1 to 11, wherein the polyurethane reaction mixture is applied to a reinforcing means, and subsequently full reaction is carried out to give the polyurethane.

13. A polyurethane obtainable by a process according to any of claims 1 to 12.

14. The use of a polyurethane according to claim 13 for producing bodywork components for vehicles.

## Revendications

1. Procédé de fabrication de polyuréthanes, selon lequel
a) un polyisocyanate,
b) un mélange, pouvant être obtenu par introduction d'un sel de métal alcalin ou alcalino-terreux dans un composé R-NH-CO-O-R' contenant au moins un groupe uréthane, qui se présente sous forme solide ou liquide à 20 °C, R étant différent de l'hydrogène et différent de COR",
c) un composé contenant un ou plusieurs groupes époxyde et éventuellement,
d) un polyol,
e) un allongeur de chaînes et
f) des charges et d'autres additifs,
sont mélangés en un mélange réactionnel et laissés réagir pour former le polyuréthane, la teneur en ions de métaux alcalins ou alcalino-terreux par groupe uréthane dans le composé (b) étant de 0,0001 à 3,5, par rapport au nombre d'ions de métaux alcalins ou alcalino-terreux et de groupes uréthane.

2. Procédé selon la revendication 1, **caractérisé en ce qu'**un premier polyisocyanate est utilisé en tant que polyisocyanate (a) et le composé contenant des groupes uréthane dans le composant (b) peut être obtenu par mise en réaction d'un deuxième polyisocyanate et d'alcools.

3. Procédé selon la revendication 1, **caractérisé en ce qu'**un premier polyisocyanate est utilisé en tant que polyisocyanate (a) et le composé contenant des groupes uréthane dans le composant (b) est un produit de réaction d'un deuxième polyisocyanate et d'un composé muni d'un groupe OH.

4. Procédé selon la revendication 1 ou 2, **caractérisé en ce qu'**un produit de réaction d'un deuxième polyisocyanate et d'un composé muni d'au moins deux groupes OH est utilisé en tant que composé contenant des groupes uréthane dans le composant (b), le deuxième isocyanate étant utilisé en excès stœchiométrique.

5. Procédé selon l'une quelconque des revendications 1 à 4, **caractérisé en ce que** le deuxième isocyanate contient un ou plusieurs isomères ou homologues du diphénylméthane.

6. Procédé selon l'une quelconque des revendications 2 à 5, **caractérisé en ce que** le premier polyisocyanate et le deuxième polyisocyanate sont identiques.

7. Procédé selon l'une quelconque des revendications 1 à 6, **caractérisé en ce que** la teneur en ions de métaux alcalins ou alcalino-terreux par groupe isocyanate dans le premier polyisocyanate (a) ainsi que, le cas échéant, dans le composé complexe (b), est de 0,0001 à 0,3, par rapport au nombre d'ions de métaux alcalins ou alcalino-terreux et de groupes uréthane.

8. Procédé selon l'une quelconque des revendications 1 à 7, **caractérisé en ce que** le composé contenant des groupes époxyde contient deux, trois ou davantage de groupes époxyde par molécule.

9. Procédé selon l'une quelconque des revendications 1 à 8, **caractérisé en ce que** le sel de métal alcalin ou alcalino-terreux est du chlorure de lithium.

10. Procédé selon l'une quelconque des revendications 1 à 9, **caractérisé en ce que** le composé complexe (b) est obtenu par mélange d'un polyisocyanate, d'un composé muni d'un composé réactif avec les isocyanates et du sel de métal alcalin ou alcalino-terreux.

11. Procédé selon l'une quelconque des revendications 1 à 10, **caractérisé en ce que** les composés contenant un ou plusieurs groupes époxyde sont utilisés en une quantité telle que le rapport équivalent entre les groupes époxyde et les groupes isocyanate des polyisocyanates (a), ainsi que les groupes isocyanate éventuellement contenus dans le composé complexe (b), est de 0,1 à 2,0.

12. Procédé selon l'une quelconque des revendications 1 à 11, **caractérisé en ce que** le mélange réactionnel de polyuréthane est appliqué sur un agent de renforcement, puis laissé réagir pour former le polyuréthane.

13. Polyuréthane, pouvant être obtenu par un procédé selon l'une quelconque des revendications 1 à 12.

14. Utilisation d'un polyuréthane selon la revendication 13 pour la fabrication de composants de carrosserie pour des véhicules.
